# EUROPÄISCHE PATENTSCHRIFT

(11) **EP 0 556 462 B1**
(45) Veröffentlichungstag und Bekanntmachung des Hinweises auf die Patenterteilung: **07.06.1995**
(21) Anmeldenummer: 92120362.6
(22) Anmeldetag: 28.11.1992
(51) Int. Cl.: B23D 19/06

(54) **Verfahren und Anlage zum Besäumen von Bändern, insbesondere warmgewalzten Metallbändern**
Method and apparatus for trimming strips, especially hot-rolled metallic strips
Méthode et dispositif pour le rognage des bandes, notamment des bandes de métal laminées à chaud

(30) Priorität: 15.02.1992 DE 4204526
(43) Veröffentlichungstag der Anmeldung: 25.08.1993
(73) Patentinhaber: BWG BERGWERK- UND WALZWERK-MASCHINENBAU GMBH, D-47051 Duisburg (DE)
(72) Erfinder: Noé, Oskar, Dipl.-Ing., W-4330 Mülheim/Ruhr (DE)
(74) Vertreter: Honke, Manfred, Dr.-Ing.

(56) Entgegenhaltungen:
- EP-A- 0 021 821
- DE-A- 3 443 849
- GB-A- 2 114 550

## Beschreibung

Die Erfindung betrifft ein Verfahren und eine Vorrichtung zum Besäumen von Bändern, insbesondere warmgewalzten Metallbändern, mittels einer Besäumschere mit beidseitig des jeweiligen Bandes verfahrbaren Schneidköpfen gemäß Oberbegriff von Patentanspruch 1 und 7; siehe EP-A 0021 821.

Besäumscheren weisen bekanntermaßen zwei Schneidköpfe mit jeweils einem kreisförmigen Ober- und Untermesser auf. Die Schneidköpfe werden auf die jeweils gewünschte Schnittbreite bzw. Fertigbandbreite eingestellt. Das zu besäumende Band wird der Besäumschere im Wege der Bandmittenregelung oder mit Hilfe seitlich anstellbarer Führungsrollen mittig zugeführt. - In kontinuierlich arbeitenden Bandbehandlungsanlagen wie Beizen, Bandbeschichtungs-, Glüh- oder Konditionierlinien werden Bänder unterschiedlicher Breite gefahren, die für Kontibetrieb durch z. B. Schweißung miteinander verbunden werden. Eine der Hauptstörquellen für den Kontibetrieb von Bandbehandlungsanlagen bringt das Besäumen der Bänder mit sich. Die Ursache hierfür liegt darin, daß beispielsweise beim Warmwalzen an beiden Bandkanten horizontale seitliche Krümmungen, sogenannte "Camber" ebenso wie Einschnürungen der Bandbreite erzeugt werden, die sich mit Hilfe einer Bandmittensteuerung nicht mehr ausregeln lassen. Solche Unregelmäßigkeiten wie auch Kantensprünge bei wechselnden Bandbreiten oder Mittenversatz im Bereich von Bandverbindungsstellen können zum Auslaufen der Saumstreifen führen. Solche ausgelaufenen Saumstreifen verheddern sich dann in regelmäßig vorhandenen Saumstreifenführungen, Schrottwicklern oder Saumstreifenhackern, welche der Besäumschere nachgeordnet sind. In solchen Fällen muß die gesamte Bandanlage stillgesetzt werden, müssen die Saumstreifen manuell entfernt werden. Dazu müssen die Schneidköpfe der Besäumschere nach Öffnen der Besäummesser auseinandergefahren werden, muß das betreffende Band zu einer Seitenstanze zurückgefahren, seitlich ausgestanzt, wieder zur Mitte der Besäumschere vorgefahren werden und müssen schließlich die Schneidköpfe wieder vorgefahren werden und die Saumstreifen neu anschneiden. Derartige Störungen sind zeitaufwendig und verhindern den kontinuierlichen Betrieb von Bandanlagen. Darüber hinaus wird die Qualität der Bänder im Prozeßteil, z. B. durch Überbeizen in Beizlinien gemindert. Erhebliche Produktionsausfälle sind die Folge. Außerdem besteht eine erhebliche Unfallgefahr bei der manuellen Beseitigung solcher Störungen. - Hier will die Erfindung Abhilfe schaffen.

Der Erfindung liegt die Aufgabe zugrunde, ein Verfahren anzugeben, wonach sich Bänder und insbesondere warmgewalzte Metallbänder im wesentlichen ohne Störfälle besäumen lassen. Außerdem soll eine Anlage geschaffen werden, die zur Durchführung dieses Verfahrens besonders geeignet ist und sich durch einfache und funktionsgerechte Bauweise auszeichnet.

Diese Aufgabe löst die Erfindung bei einem gattungsgemäßen Verfahren dadurch, daß der von den erfaßten Unregelmäßigkeiten bis zu der Besäumschere zurückgegelegte oder noch zurückzulegende Weg ermittelt werden, daß aus diesen Parametern die an beiden Bandkanten verbleibende Saumstreifenbreite und ihre jeweilige Position im Vergleich mit der an der Besäumschere eingestellten Fertigbandbreite errechnet werden, und daß beim Unterschreiten einer Mindestsaumbreite die unabhängig voneinander verfahrbaren Schneidköpfe mittels errechneter Steuersignale im Wege der Steuerung mit einer auf die Bandgeschwindigkeit abgestimmten Fahrgeschwindigkeit auf eine das Auslaufen oder Abscheren eines oder beider Saumstreifen verhindernde Schnittbreite in Echtzeit verfahren werden.

Nach dem erfindungsgemäßen Besäumverfahren bleibt für den geraden Besäumschnitt die übliche Bandmittensteuerung verantwortlich. Die gesteuerten bzw. geregelten Schneidköpfe werden nach Lehre der Erfindung der Bandrohkante und folglich sämtlichen Seitenkrümmungen (Camber), Einschnürungen, Kantensprüngen bei Bandverbindungsstellen oder dergleichen, die bei dicken Bändern, z. B. 3 bis 6 mm, wegen ihrer Steifigkeit, bei dünnen Bändern, z. B. 0,3 bis 1,5 mm, wegen ihrer Faltenbildung von der Mittensteuerung nicht mehr ausgeregelt werden können, derart der Bandrohkante nachgeführt, daß die Saumstreifen nicht auslaufen bzw. abgeschert werden, selbst wenn die Fertigbandbreite unterschritten wird. In diesem Zusammenhang geht die Erfindung von der Erkenntnis aus, daß alle nicht gerade geschnittenen Bandlängen ohnehin Ausschuß sind. Es kommt also entscheidend darauf an, Störungen und daraus resultierende Produktionsausfälle zu vermeiden. Desweiteren kann im Rahmen des erfindungsgemäßen Verfahrens auch ein fliegender Breitenwechsel von Band zu Band erfolgen, da sich die Bandverbindungsstellen erfassen lassen und die Schneidköpfe programmgesteuert auf eine neue Bandbreite gefahren werden können. Das gilt auch beim Mittenversatz. - "Echt-Zeit" meint, daß Programme zur Verarbeitung der anfallenden Daten in der Weise betriebsbereit sind, daß die Ergebnisse innerhalb einer vorgegebenen Zeit verfügbar und folglich die Schneidköpfe verfahrbar sind. Im Rahmen der Erfindung wird Echt-Zeit-Betrieb im Rahmen einer Prozeßdatenverarbeitung angewendet, um die Reaktionszeit zu begrenzen und folglich stets ein rechtzeitiges und exaktes Verfahren der Schneidköpfe zu erreichen. In diesem Zusammenhang sieht die Erfindung auch vor, daß Unregelmäßigkeiten und ihre Positionen in den Bandkantenbereichen in einem solchen Abstand von der Besäumschere erfaßt werden, daß die Bandgeschwindigkeit bis auf Null absenkbar ist, bevor die jeweilige Unregelmäßigkeit die Besäumschere oder eine vorgeordnete Seitenstanze erreicht. Denn es gibt auch solche Unregelmäßigkeiten, die Seitenausschnitte zum Einfahren der Schneidköpfe bzw. ihrer Besäummesser verlangen, insbesondere bei Breitenwechseln. Zweckmäßigerweise wird das jeweilige Band zumindest im Bereich der Besäumschere unter einem einstellbaren Zug gehalten, der ein Verschieben des Bandes beim Ändern der Schnittbreite durch die Schneidköpfe verhindert. Weiter sieht die Erfindung vor, daß bei einem Breitenwechsel miteinander verbundener Bänder ein dem üblichen Breitensprung von 10 bis 100 mm entsprechendes Rechnerprogramm zum rechtzeitigen und exakten Verfahren der Schneidköpfe auf die neue Schnittbreite abgerufen wird. Auch in diesem Fall werden die Schneidköpfe über den Weggeber unter Abstimmung ihrer Fahrgeschwindigkeit auf die Bandgeschwindigkeit unabhängig voneinander auf beiden Bandseiten auf die neue Schnittbreite verfahren. Vorzugsweise wird beim Mittenversatz an einer Bandverbindungsstelle ein dem Versatzmaß bzw. Kantensprung entsprechendes Rechnerprogramm abgerufen, wonach die Schneidköpfe um ein das Auslaufen bzw. Abscheren der Saumstreifen verhinderndes Maß verfahren werden. Auch ein Überschreiten der Maximalsaumstreifenbreite wird zweckmäßigerweise erfaßt, um die Bandanlage automatisch stillsetzen zu können. Dadurch wird vermieden, daß die Saumstreifen gegen die Schneidköpfe fahren und dort zu Komplikationen führen. Bei Überschreiten der maximal zulässigen Saumbreite werden die Schneidköpfe aus dem Band herausgefahren.

Gegenstand der Erfindung ist auch eine Anlage zum Steuern einer Besäumschere im Zuge des Besäumens von Bändern, insbesondere warmgewalzten Metallbändern, mit einer Besäumschere mit beidseitig des jeweiligen Bandes verfahrbaren und auf vorgegebene Fertigbandbreite einstellbaren Schneidköpfen und mit einer der Besäumschere vorgeordneten Bandmittensteuerung, wobei in einem vorgegebenen Abstand vor der Besäumschere ein erstes Meßgerät zum kontinuierlichen Erfassen zumindest der Bandbreite des Bandkantenverlaufs und von Kantensprüngen an Bandverbindungsstellen sowie daraus resultierender Unregelmäßigkeiten in beiden Bandkantenbereichen angeordnet ist, dadurch gekennzeichnet, daß mit dem ersten Meßgerät ein vorgeschalteter erster Weggeber zum Ermitteln des von den erfaßten Unregelmäßigkeiten zwischen dem ersten Meßgerät und der Besäumschere jeweils zurückgelegten Weges gekoppelt ist, daß das erste Meßgerät und der erste Weggeber an einen ersten Rechner angeschlossen sind, der die jeweilige verbleibende Saumstreifenbreite für beide Bandkanten in bezug auf die eingestellte Fertigbandbreite errechnet und bei Unterschreiten einer Mindestsaumbreite Steuersignale an eine Steuereinrichtung für die unabhängig voneinander verfahrbaren Schneidköpfe abgibt, und daß die Schneidköpfe zur Erhaltung der Mindestsaumbreite selbst beim Unterschreiten der Fertigbandbreite mit einer auf die Bandgeschwindigkeit abgestimmten Fahrgeschwindigkeit der Bandrohkante nachgeführt oder verfahren werden.

Auf diese Weise werden Störfälle vermieden, weil ein Auslaufen der Saumstreifen und folglich deren Abscheren vermieden wird. Die Besäumschere ist vorzugsweise zwischen zwei Spanntrommelsätzen angeordnet, um eben das Band im Bereich der Schneidköpfe unter einem einstellbaren Zug zu halten und ein Verschieben des Bandes zu verhindern. Auch das erste Meßgerät ist zweckmäßigerweise zwischen den beiden Spanntrommelsätzen angeordnet. Im Rahmen der Erfindung kann das erste Meßgerät als ein die maximale Bandbreite übersteigender Scanner ausgebildet sein.

Nach einem weiteren Vorschlag der Erfindung, und diesem Vorschlag kommt selbständige Bedeutung zu, ist vorgesehen, daß in einem vorgegebenen Abstand vor dem ersten Meßgerät und dem ersten Weggeber ein zweites Meßgerät zum Erfassen von Unregelmäßigkeiten in beiden Bandkantenbereichen und ein mit dem zweiten Meßgerät gekoppelter zweiter Weggeber angeordnet und an einen zweiten Rechner angeschlossen sind, der mit dem ersten Rechner in Verbindung steht. Auf diese Weise werden Unregelmäßigkeiten in den Bandkantenbereichen so rechtzeitig erfaßt, daß die Bandgeschwindigkeit gegebenenfalls bis auf Null abgesenkt werden kann, bevor eine Fehlstelle die Besäumschere oder eine vorgeordnete Seitenstanze erreicht, um dort eventuell erforderlich werdende Seitenausschnitte zum Einfahren der Schneidköpfe bzw. ihrer Besäummesser vornehmen zu können.

Im folgenden wird die Erfindung anhand einer lediglich ein Ausführungsbeispiel darstellenden Zeichnung näher erläutert; es zeigen:

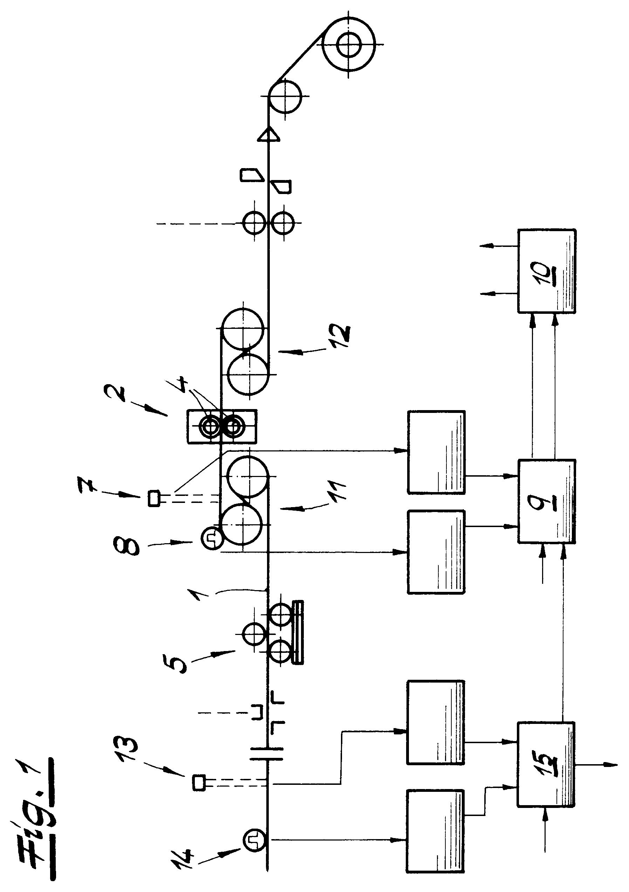

- Fig. 1: eine erfindungsgemäße Besäumanlage in schematischer Seitenansicht,

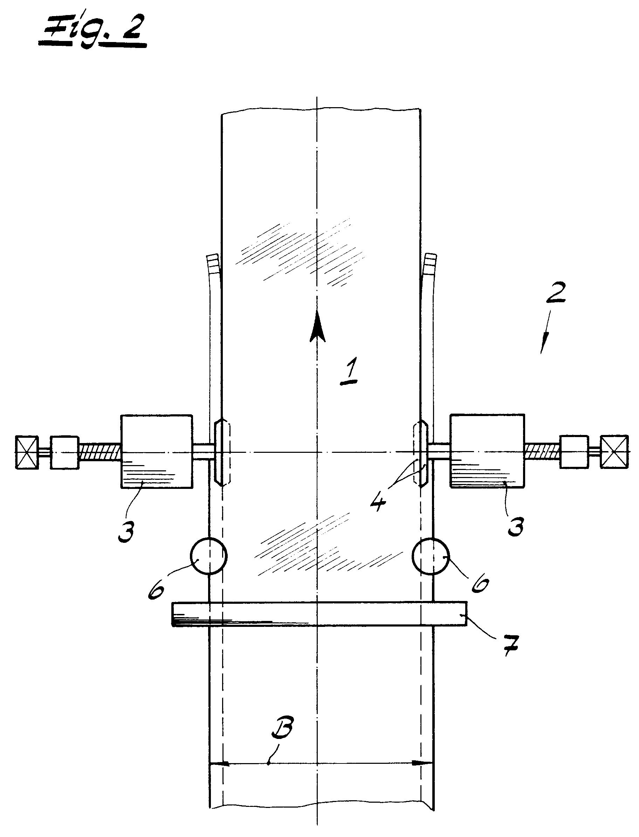

- Fig. 2: ausschnittsweise ein Band mit auf Fertigbandbreite eingestellten Schneidköpfen,
- Fig. 3: ausschnittsweise ein Band mit horizontalen seitlichen Krümmungen, sogenannte Camber,

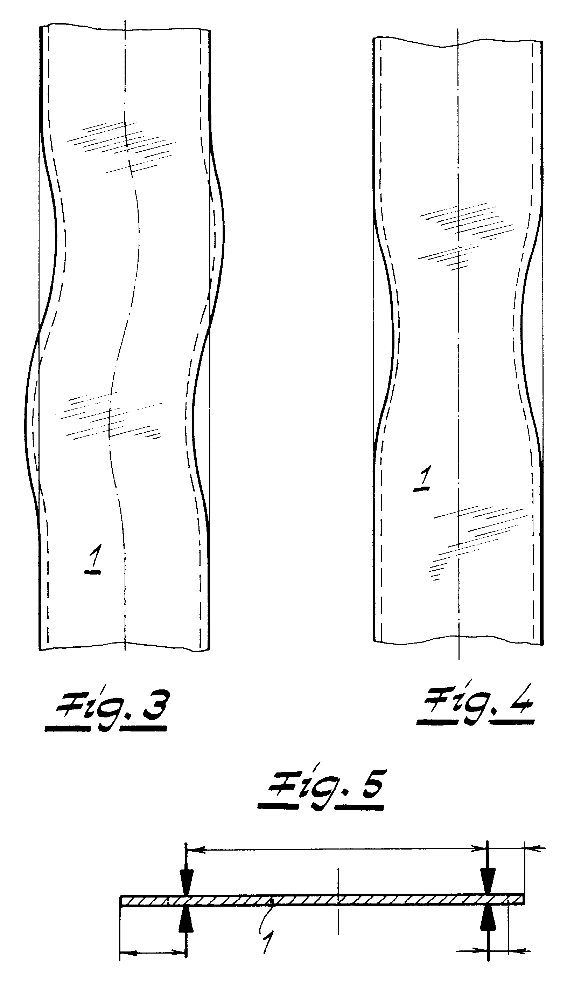

- Fig. 4: ausschnittsweise ein Band mit seitlichen Einschnürungen,

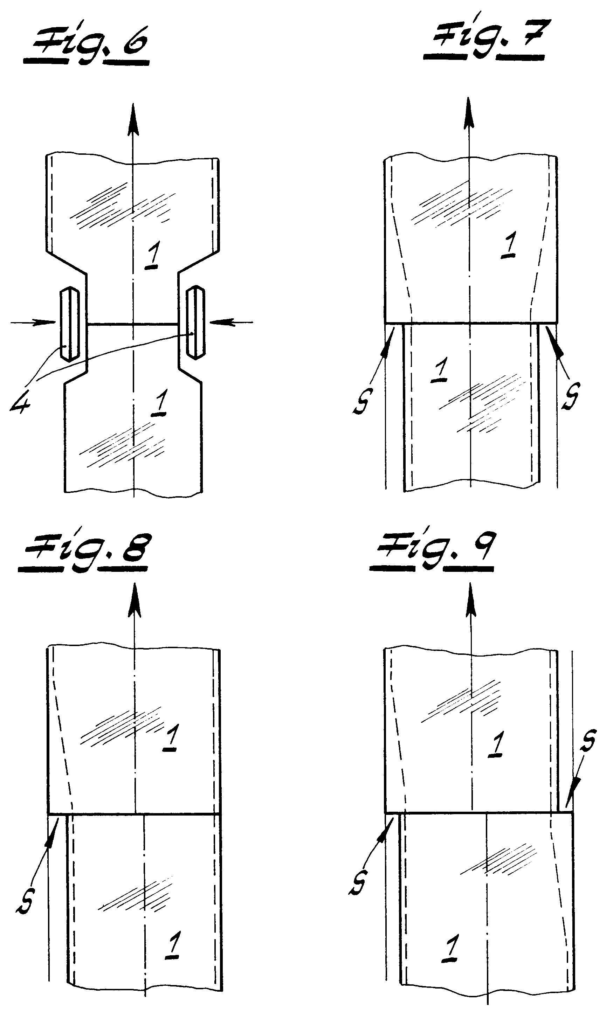

- Fig. 5: einen Bandquerschnitt mit Fertigbandbreite, minimaler, normaler und maximaler Saumbreite,
- Fig. 6: ausschnittsweise ein Band mit Seitenausschnitten zum Einfahren der Schneidköpfe bzw. ihrer Besäummesser,
- Fig. 7: ausschnittsweise ein Band mit Kantensprüngen bei Bandbreitenwechsel,
- Fig. 8: ausschnittsweise ein Band mit Mittenversatz und einseitigem Kantensprung und
- Fig. 9: ausschnittsweise ein Band mit Mittenversatz und beidseitigen Kantensprüngen.

In den Figuren ist eine Anlage zum Besäumen von Bändern bzw. Metallbändern, insbesondere warmgewalzten Metallbändern 1 dargestellt. Diese Anlage weist eine Besäumschere 2 mit beidseitig des jeweiligen Bandes verfahrbaren und auf vorgegebene Fertigbandbreite einstellbaren Schneidköpfen 3 mit Besäummessern 4 und eine der Besäumschere 2 vorgeordnete Bandmittensteuerung 5, 6 mit einerseits Steuerrollen 5 und andererseits einer Optik 6 im Bereich beider Bandkanten auf. Der Besäumschere 2 ist ein erstes Meßgerät 7 zum Erfassen zumindest der Bandbreite B, des Bandkantenverlaufs und von Kantensprüngen S an Bandverbindungsstellen sowie daraus resultierender Unregelmäßigkeiten in beiden Bandkantenbereichen und ein mit dem ersten Meßgerät 7 gekoppelter erster Weggeber 8 bzw. erstes Wegmeßgerät zum kontinuierlichen Ermitteln des von den erfaßten Unregelmäßigkeiten zwischen dem ersten Meßgerät 7 und der Besäumschere 2 jeweils zurückgelegten Weges vorgeschaltet. Das erste Meßgerät 7 und der erste Weggeber 8 sind an einen ersten Rechner 9 angeschlossen, der die jeweilige verbleibende Saumstreifenbreite für beide Bandkanten in bezug auf die an der Besäumschere 2 eingestellte Fertigbandbreite errechnet und bei Unterschreiten einer Mindestsaumbreite Steuersignale an eine Steuer- bzw. Regeleinrichtung 10 für die unabhängig voneinander verfahrbaren Schneidköpfe 3 abgibt. Die Schneidköpfe 3 werden zur Erhaltung der Mindestsaumbreite selbst beim Unterschreiten der Fertigbandbreite mit einer auf die Bandgeschwindigkeit abgestimmten Fahrgeschwindigkeit der Bandrohkante nachgeführt bzw. verfahren. Die Besäumschere 2 ist zwischen zwei Spanntrommelsätzen 11, 12 angeordnet. Das gilt auch für das erste Meßgerät 7, welches als ein die maximale Bandbreite übersteigender Scanner ausgebildet ist.

Nach dem Ausführungsbeispiel ist in einem vorgegebenen Abstand vor dem ersten Meßgerät 7 und dem ersten Weggeber 8 ein zweites Meßgerät 13 zum Erfassen von Unregelmäßigkeiten in beiden Bandkantenbereichen und ein mit dem zweiten Meßgerät 13 gekoppelter zweiter Weggeber 14 angeordnet. Beide sind an einen zweiten Rechner 15 angeschlossen, der mit dem ersten Rechner 9 verbunden ist.

Im übrigen können anstelle der Spanntrommelsätze 11, 12 auch Treibrollensätze eingesetzt werden.

## Patentansprüche

1. Verfahren zum Steuern einer Besäumschere (2) im Zuge des Besäumens von Bändern, insbesondere warmgewalzten Metallbändern (1), wobei die Besäumschere (2) beidseitig des jeweiligen Bandes verfahrbare Schneidköpfe (3) aufweist und in einem vorgegebenen Abstand vor der Besäumschere (2) zumindest die Bandbreite (B), der Bandkantenverlauf und Kantensprünge (S) an Bandverbindungsstellen sowie daraus resultierende Unregelmäßigkeiten in beiden Bandkantenbereichen kontinuierlich erfaßt werden, dadurch gekennzeichnet, daß der von den erfaßten Unregelmäßigkeiten bis zu der Besäumschere (2) zurückgegelegte oder noch zurückzulegende Weg ermittelt werden, daß aus diesen Parametern die an beiden Bandkanten verbleibende Saumstreifenbreite und ihre jeweilige Position im Vergleich mit der an der Besäumschere (2) eingestellten Fertigbandbreite errechnet werden, und daß beim Unterschreiten einer Mindestsaumbreite die unabhängig voneinander verfahrbaren Schneidköpfe (3) mittels errechneter Steuersignale im Wege der Steuerung mit einer auf die Bandgeschwindigkeit abgestimmten Fahrgeschwindigkeit auf eine das Auslaufen oder Abscheren eines oder beider Saumstreifen verhindernde Schnittbreite in Echtzeit verfahren werden.

2. Verfahren nach Anspruch 1, dadurch gekennzeichnet, daß Unregelmäßigkeiten und ihre Positionen in den Bandkantenbereichen in einem solchen Abstand von der Besäumschere erfaßt werden, daß die Bandgeschwindigkeit bis auf Null absenkbar ist, bevor die jeweilige Unregelmäßigkeit die Besäumschere oder eine vorgeordnete Seitenstanze erreicht.

3. Verfahren nach Anspruch 1 oder 2, dadurch gekennzeichnet, daß das jeweilige Band zumindest im Bereich der Besäumschere unter einem einstellbaren Zug gehalten wird.

4. Verfahren nach einem der Ansprüche 1 bis 3, dadurch gekennzeichnet, daß bei einem Breitenwechsel miteinander verbundener Bänder ein dem üblichen Breitensprung von 10 bis 100 mm entsprechendes Rechnerprogramm zum rechtzeitigen und exakten Einfahren bzw. Verfahren der Schneidköpfe auf die neue Schnittbreite abgerufen wird.

5. Verfahren nach einem der Ansprüche 1 bis 4, dadurch gekennzeichnet, daß bei Mittenversatz an einer Bandverbindungsstelle ein dem Versatzmaß bzw. Kantensprung entsprechendes Rechnerprogramm abgerufen wird, wonach die Schneidköpfe um ein das Auslaufen bzw. Abreißen der Saumstreifen verhinderndes Maß verfahren werden.

6. Verfahren nach einem der Ansprüche 1 bis 5, dadurch gekennzeichnet, daß ein Überschreiten der Maximalsaumstreifenbreite erfaßt und die betreffende Bandanlage automatisch stillgesetzt wird.

7. Anlage zum Steuern einer Besäumschere (2) im Zuge des Besäumens von Bändern, insbesondere warmgewalzten Metallbändern (1), mit einer Besäumschere (2) mit beidseitig des jeweiligen Bandes verfahrbaren und auf vorgegebene Fertigbandbreite einstellbaren Schneidköpfen (3) und mit einer der Besäumschere (2) vorgeordneten Bandmittensteuerung, wobei in einem vorgegebenen Abstand vor der Besäumschere (2) ein erstes Meßgerät (7) zum kontinuierlichen Erfassen zumindest der Bandbreite (B) des Bandkantenverlaufs und von Kantensprüngen (S) an Bandverbindungsstellen sowie daraus resultierender Unregelmäßigkeiten in beiden Bandkantenbereichen angeordnet ist, dadurch gekennzeichnet, daß mit dem ersten Meßgerät (7) ein vorgeschalteter erster Weggeber (8) zum Ermitteln des von den erfaßten Unregelmäßigkeiten zwischen dem ersten Meßgerät (7) und der Besäumschere (2) jeweils zurückgelegten Weges gekoppelt ist, daß das erste Meßgerät (7) und der erste Weggeber (8) an einen ersten Rechner (9) angeschlossen sind, der die jeweilige verbleibende Saumstreifenbreite für beide Bandkanten in bezug auf die eingestellte Fertigbandbreite errechnet und bei Unterschreiten einer Mindestsaumbreite Steuersignale an eine Steuereinrichtung (10) für die unabhängig voneinander verfahrbaren Schneidköpfe (3) abgibt, und daß die Schneidköpfe (3) zur Erhaltung der Mindestsaumbreite selbst beim Unterschreiten der Fertigbandbreite mit einer auf die Bandgeschwindigkeit abgestimmten Fahrgeschwindigkeit der Bandrohkante nachgeführt oder verfahren werden.

8. Anlage nach Anspruch 7, dadurch gekennzeichnet, daß die Besäumschere (2) zwischen zwei Spanntrommelsätzen (11, 12) oder Treibrollensätzen angeordnet ist.

9. Anlage nach Anspruch 7 oder 8, dadurch gekennzeichnet, daß das erste Meßgerät (7) zwischen den beiden Spanntrommelsätzen (11, 12) oder Treibrollensätzen angeordnet ist.

10. Anlage nach einem der Ansprüche 7 bis 9, dadurch gekennzeichnet, daß das erste Meßgerät (7) als ein die maximale Bandbreite übersteigender Scanner ausgebildet ist.

11. Anlage nach einem der Ansprüche 7 bis 10, dadurch gekennzeichnet, daß in einem vorgegebenen Abstand vor dem ersten Meßgerät (7) und dem ersten Weggeber (8) ein zweites Meßgerät (13), z. B. Scanner, zum Erfassen von Unregelmäßigkeiten in beiden Bandkantenbereichen und ein mit dem zweiten Meßgerät (13) gekoppelter zweiter Weggeber (14) angeordnet und an einen zweiten Rechner (15) angeschlossen sind, der mit dem ersten Rechner (9) verbunden ist.

## Claims

1. A method of controlling a trimming shears unit (2) during the trimming of strips, particularly hot-rolled metal strips (1), wherein the trimming shears unit (2) has cutting heads (3) which can travel on both sides of the respective strip, and at least the strip width (B), the course of the strip edges and edge discontinuities (S) at strip joint locations, as well as irregularities resulting therefrom in both strip edge regions, are continuously detected at a predetermined distance upstream of the trimming shears unit (2), characterised in that the distance covered or still to be covered from the detected irregularities to the trimming shears unit (2) is determined, that from these parameters the cutoff edge width remaining at both strip edges and its respective position compared with the finished strip width set at the trimming shears unit (2) are calculated, and that on undershooting a minimum cutoff edge width the cutting heads (3), which can travel independently of each other, are moved in real time by the control system by means of calculated control signals, and at a speed of travel matched to the strip speed, to a cut width which prevents the runout or shearing off of one or both cutoff edges.

2. A method according to claim 1, characterised in that irregularities and their positions in the strip edge regions are detected at a distance from the trimming shears unit such that the strip speed can be reduced right down to zero before the respective irregularity reaches the trimming shears unit or a side stamping unit disposed upstream of the latter.

3. A method according to claim 1 or 2, characterised in that the respective strip is held under an adjustable tension, at least in the region of the trimming shears unit.

4. A method according to any one of claims 1 to 3, characterised in that when changing the strip width of joined together strips a computer program corresponding to the normal jump in width of 10 to 100 mm is called up for the timely and accurate approach or movement of the cutting heads on to the new strip width.

5. A method according to any one of claims 1 to 4, characterised in that when there are offset centres at a strip joint location a computer program is called up corresponding to the extent of the offset or the edge discontinuity, according to which computer program the cutting heads are moved by an extent which prevents runout or tear-off of the cutoff edge widths.

6. A method according to any one of claims 1 to 5, characterised in that an overshoot beyond the maximum cutoff edge width is detected and the strip installation concerned is automatically stopped.

7. An installation for controlling a trimming shears unit (2) during the trimming of strips, particularly hot-rolled metal strips (1), having a trimming shears unit (2) with cutting heads (3) which can travel on both sides of the respective strip and which can be adjusted to a predetermined finished strip width, and having a strip centre control system disposed upstream of the trimming shears unit (2), wherein a first measuring device (7), for the continuous detection of at least the strip width (B), of the course of the strip edges, and of edge discontinuities (S) at strip joint locations, as well as irregularities resulting therefrom in both strip edge regions, is disposed at a predetermined distance upstream of the trimming shears unit (2), characterised in that a first distance transmitter (8) for determining the distance covered by the detected irregularities between the first measuring device (7) and the trimming shears unit (2) in each case is disposed upstream of, and is coupled to, the first measuring device (7), that the first measuring device (7) and the first distance transmitter (8) are connected to a first computer (9) which calculates the respective remaining cutoff edge width for both strip edges with respect to the set finished strip width and sends control signals to a controller (10) for the cutting heads (3), which can travel independently of each other, when there is undershooting of a minimum cutoff edge width, and that the cutting heads (3) are tracked or moved at a speed of travel of the uncut strip edge matched to the strip speed to maintain the minimum cutoff edge width even when there is undershooting of the finished strip width.

8. An installation according to claim 7, characterised in that the trimming shears unit (2) is disposed between two sets of stretching rolls (11, 12) or sets of drive rolls.

9. An installation according to claim 7 or 8, characterised in that the first measuring device (7) is disposed between the two sets of stretching rolls (11, 12) or sets of drive rolls.

10. An installation according to any one of claims 7 to 9, characterised in that the first measuring device (7) is designed as a scanner which exceeds the maximum strip width.

11. An installation according to any one of claims 7 to 10, characterised in that a second measuring device (13), e.g. a scanner, for detecting irregularities in both strip edge regions, and a second distance transmitter (14) coupled to the second measuring device (13), are disposed at a predetermined distance upstream of the first measuring device (7) and the first distance transmitter (8) and are connected to a second computer (15) which is connected to the first computer (9).

## Revendications

1. Procédé de commande d'une cisaille à rogner (2) au cours du rognage de rubans, en particulier de feuillards (1) laminés à chaud, la cisaille à rogner (2) comportant des têtes de coupe (3) déplaçables de part et d'autre du feuillard concerné, et dans lequel, à une distance donnée devant la cisaille à rogner (2), au moins la largeur (B) du feuillard, le parcours des bords du feuillard et les discontinuités des bords (S) aux points d'assemblage des feuillards ainsi que les irrégularités qui en découlent dans les deux zones des bords du feuillard, sont détectés en continu, caractérisé en ce que la distance parcourue depuis les irrégularités détectées jusqu'à la cisaille à rogner (2) ou restant à parcourir, est déterminée, en ce qu'à partir de ces paramètres la largeur de la bande à rogner, restant sur les deux bords du feuillage, et sa position respective comparée à la largeur du feuillard fini, réglée sur la cisaille à rogner (2), sont calculées, et en ce que dans le cas où une largeur à rogner minimale n'est pas atteinte, les têtes de coupe (3), déplaçables indépendamment l'une de l'autre sont déplacées en temps réel, au moyen de signaux de commande calculés, au cours de la commande, à une vitesse de réglage accordée à la vitesse du feuillard, sur une largeur de coupe empêchant le déraillement ou le cisaillage de l'une ou des deux bandes de rognage.

2. Procédé selon la revendication 1, caractérisé en ce que des irrégularités et leurs positions dans les zones du bord du feuillard sont détectées à une distance de la cisaille à rogner, telle que la vitesse du feuillard puisse être abaissée à zéro, avant que l' irrégularité concernée n'atteigne la cisaille à rogner ou une machine à découper latérale située en amont.

3. Procédé selon la revendication 1 ou 2, caractérisé en ce que le feuillard respectif est maintenu sous une traction réglable, au moins dans la zone de la cisaille à rogner.

4. Procédé sel on l'une des revendications 1 à 3, caractérisé en ce que dans le cas d'un changement de largeur de feuillards reliés entre eux, un programme d' ordinateur, correspondant au saut de largeur usuel de 10 à 100 mm, est appelé, pour l'introduction en temps voulu et précise ou le réglage des têtes de coupe sur la nouvelle largeur de coupe.

5. Procédé sel on l'une des revendications 1 à 4, caractérisé en ce qu'en cas de déport des axes en un point d' assemblage des feuillards, un programme d'ordinateur correspondant à la valeur du déport ou à une discontinuité des bords, est appelé, les têtes de coupe étant déplacées selon ce programme d'une distance empêchant le déraillement ou l'arrachage des bandes à rogner.

6. Procédé selon l'une des revendications 1 à 5, caractérisé en ce qu'un dépassement de la largeur maximale de la bande à rogner est détecté et l'installation concernée des feuillards est automatiquement mise à l'arrêt.

7. Installation de commande d'une cisaille à rogner (2) au cours du rognage de rubans, en particulier de feuillards (1) laminés à chaud, comportant une cisaille à rogner (2) avec des têtes de coupe (3) déplaçables de part et d'autre du feuillard concernée et réglables sur une largeur de feuillard fini donnée et comportant une commande de centrage de feuillard, montée en amont de la cisaille à rogner (2), dans laquelle, à une distance donnée devant la cisaille à rogner (2), il est prévu un premier appareil de mesure (7) pour détecter en continu au moins la largeur de feuillard (B), le parcours des bords du feuillard et les discontinuités des bords (S) aux points d'assemblage des feuillards ainsi que les irrégularités qui en résultent dans les deux zones des bords du feuillard, caractérisée en ce qu'avec le premier appareil de mesure (7) est couplé un premier capteur de distance (8), situé en amont, destiné à déterminer la distance parcourue dans chaque cas par les irrégularités détectées, entre le premier appareil de mesure (7) et la cisaille à rogner (2), en ce que le premier appareil de mesure (7) et le premier capteur de mesure (8) sont connectés à un premier ordinateur (9), qui calcule la largeur de bande à rogner restante pour les deux bords du feuillard, par rapport à la largeur de feuillard fini réglée et qui dans le cas où une largeur à rogner minimale n'est pas atteinte, délivre des signaux de commande à un dispositif de commande (10) pour les têtes de coupe déplaçables indépendamment l'une de l'autre, et en ce que les têtes de coupe (3) suivent le bord brut du feuillard ou sont déplacées à une vitesse accordée à la vitesse du feuillard, afin de conserver la largeur minimale à rogner, y compris dans le cas où la largeur de feuillard fini n'est pas atteinte.

8. Installation selon la revendication 7, caractérisée en ce que la cisaille à rogner (2) est placée entre deux ensembles de tambours tendeurs (11, 12) ou ensembles de poulies motrices.

9. Installation selon la revendication 7 ou 8, caractérisée en ce que le premier appareil de mesure (7) est Placé entre les deux ensembles de tambours tendeurs (11, 12) ou ensembles de poulies motrices.

10. Installation selon l'une des revendications 7 à 9, caractérisée en ce que le premier appareil de mesure (7) est un scanner dépassant la largeur maximale du feuillard.

11. Installation selon l'une des revendications 7 à 10 caractérisée en ce qu'à une distance donnée devant le premier appareil de mesure (7) et le premier capteur de distance (8), il est prévu un second appareil de mesure (13), par exemple un scanner, destiné à détecter des irrégularités dans les deux zones du bord du feuillard, ainsi qu'un second capteur de distance (14), couplé au second appareil de mesure (13), lesquels sont connectés à un second ordinateur (15), qui est relié au premier ordinateur (9).
